# FASCICULE DE BREVET EUROPEEN

(11) **EP 2 125 346 B1**
(45) Date de publication et mention de la délivrance du brevet: **18.08.2010**
(21) Numéro de dépôt: 07856688.2
(22) Date de dépôt: 13.12.2007
(51) Int. Cl.: B29C 70/52, B29C 70/32, B29C 35/10

(54) **PROCEDE ET DISPOSITIF DE FABRICATION D'UN ANNEAU COMPOSITE**
VERFAHREN UND VORRICHTUNG ZUR HERSTELLUNG EINES VERBUNDRINGS
METHOD AND DEVICE FOR THE MANUFACTURE OF A COMPOSITE RING

(30) Priorité: 27.12.2006 FR 0611514
(43) Date de publication de la demande: 02.12.2009
(73) Titulaire: Société de Technologie MICHELIN, 63000 Clermont-Ferrand (FR); MICHELIN Recherche et Technique S.A., 1763 Granges-Paccot (CH)
(72) Inventeur: DELFINO, Antonio, CH-1772 Grolley (CH); MERALDI, Jean-Paul, CH-8049 Zurich (CH)
(74) Mandataire: Ribière, Joel
(86) Numéro de dépôt international: PCT/EP2007/010942
(87) Numéro de publication internationale: WO 2008/080535

(56) Documents cités:
- EP-A1- 1 174 250
- DE-A1- 3 109 365

## Description

La présente invention est relative aux matériaux composites à base de fibres et de résine durcissable, aux pièces composites fabriquées à partir de tels matériaux ainsi qu'aux procédés et dispositifs de fabrication de tels matériaux ou pièces composites.

La demande de brevet EP-A-1 074 369 a décrit un procédé de fabrication d'une pièce composite d'épaisseur donnée, de forme convexe, comprenant des fibres de renforcement parallèles à au moins une direction de renforcement privilégiée, lesdites fibres étant noyées dans une matrice à base d'une composition comprenant une résine durcissable par un rayonnement ionisant, le procédé comportant les étapes suivantes :
- disposer lesdites fibres de renforcement sensiblement parallèlement à un plan et les imprégner de ladite composition à l'état liquide ;
- exposer la composition contenant lesdites fibres, en couche d'épaisseur inférieure à ladite épaisseur donnée, à un rayonnement ionisant, pour polymériser partiellement la résine et obtenir un précomposite dans lequel ladite composition est en phase solide ;
- prélever des tronçons élémentaires dans le précomposite solide ainsi obtenu et les appliquer sur un support, dont la surface est de forme non plane, en les empilant les uns sur les autres en un nombre dicté par ladite épaisseur donnée, et en leur faisant épouser intimement ladite forme du support et ainsi créer un empilage de tronçons élémentaires contraints ;
- soumettre enfin l'empilage ainsi obtenu à un moulage final, sous pression et température élevées, afin de poursuivre la polymérisation de la résine et solidariser ainsi les différents tronçons de précomposite.

Grâce au procédé décrit, il est possible d'obtenir des pièces composites utilisables notamment pour la fabrication de bandages non pneumatiques pour véhicule automobile.

Un inconvénient toutefois de ce procédé est qu'il nécessite, après solidification de la matrice à base de résine, d'abord de sectionner le précomposite solide en tronçons élémentaires, ensuite de superposer, à la forme finale désirée, les tronçons élémentaires contraints, autant de manipulations successives qui sont pénalisantes du point de vue industriel et antinomiques de la recherche de cadences de fabrication élevées.

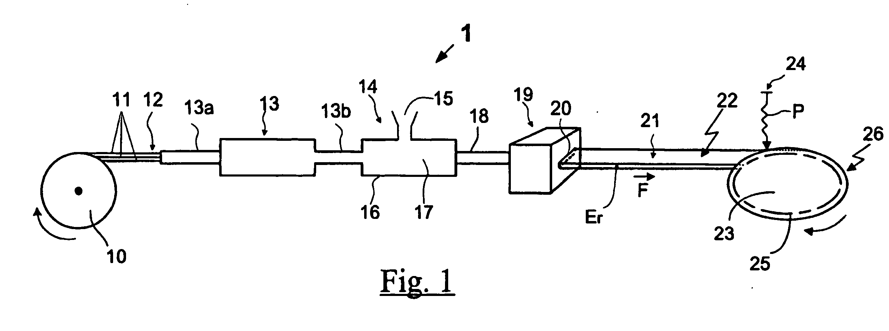

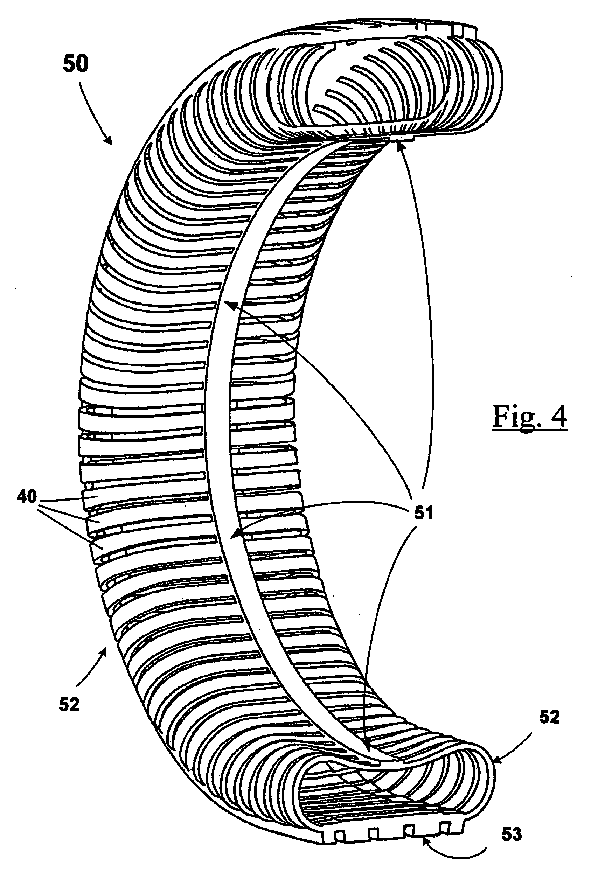

La demande de brevet EP-A-1 174 250 qui décrit l'art antérieure le plus proche a proposé quant à elle :
- de dégazer l'arrangement de fibres avant de l'imprégner ;
- après imprégnation sous vide, de faire passer l'imprégné liquide au travers d'une filière calibrée, ayant une section de surface et de forme prédéfinies, pour imposer une forme prédéterminée audit imprégné telle que par exemple celle d'un fil de section ronde (voir par exemple Fig. 1 à 3) ou plus particulièrement celle d'un ruban (Fig. 4 à 7) ;
- puis, en aval de la filière, de stabiliser ledit fil ou ruban par une solidification substantielle de la résine dans des chambres dites de stabilisation comportant une série de tubes d'irradiation (référencés par exemple respectivement 131 et 231 aux Fig. 1 et 4) émettant dans le spectre UV-visible ;
- enfin d'enrouler ledit fil ou ruban solide (stabilisé) sur une bobine de réception de grand diamètre (référencée par exemple 141 à la Fig. 1), pour un stockage intermédiaire.

On peut ensuite préparer des pièces composites par dévidage puis ré-enroulement en couches solides dudit fil ou ruban, sur tout support de forme appropriée.

Toutefois, si les précédents inconvénients de tronçonnage et d'assemblage de tronçons précontraints sont ainsi supprimés, le second procédé exige comme le précédent que l'opération de solidification (polymérisation) de la résine soit conduite sur une épaisseur substantielle de matière de telle manière que le produit soit suffisamment "stabilisé", c'est-à-dire manipulable sans le détruire, pour les opérations ultérieures de fabrication des pièces composites finales. Cette exigence implique notamment l'emploi de chambres de stabilisation de longueurs importantes, avec plusieurs tubes d'irradiation en série, pour l'obtention d'intensités de traitement suffisantes, en particulier lorsque l'on souhaite travailler à des vitesses de défilement élevées.

Poursuivant ses recherches, la Demanderesse a trouvé un procédé nouveau qui permet de préparer une pièce composite de très haute qualité, sous forme d'un anneau continu, tout en supprimant purement et simplement la chambre de stabilisation et sa série de tubes d'irradiation UV tels que décrits dans la demande EPA-1 174 250 ci-dessus. Ceci simplifie de manière notable procédé et dispositif de fabrication, réduisant du même coup sensiblement le coût industriel final des blocs composites visés.

En conséquence, la présente invention a pour objet un procédé de fabrication d'un bloc composite de géométrie fermée, sous forme d'un anneau continu, à base de fibres de renforcement et d'une résine réticulable, par enroulement en continu et superposition en un nombre de couches prédéterminé Nc d'un ruban desdites fibres de renforcement noyées dans une matrice à base d'une composition comportant ladite résine réticulable, ledit procédé comportant, d'amont en aval, les étapes suivantes :
■ réaliser un arrangement rectiligne de fibres de renforcement, et entraîner cet arrangement dans une direction d'avancement ;
■ dégazer l'arrangement de fibres par l'action du vide ;
■ après dégazage, imprégner ledit arrangement de fibres par ladite composition de résine à l'état liquide ;
■ faire passer l'imprégné ainsi obtenu au travers d'une filière pour imposer audit imprégné une forme de ruban constitué des fibres de renforcement dans leur matrice de résine liquide, l'épaisseur (notée "Er") dudit ruban étant comprise entre 0,1 mm et 0,5 mm ;
■ en sortie de filière, appliquer un traitement de surface sur la face supérieure dudit ruban pour créer une peau solide dont l'épaisseur (notée "Ep") représente moins de 10% de l'épaisseur Er du ruban, de telle manière que ladite peau serve de base lors de l'enroulement subséquent du ruban sur lui-même ;
■ déposer le ruban ainsi traité superficiellement sur un support dictant la forme finale du bloc composite, et enrouler ledit ruban sur ledit support, unidirectionnellement, par superposition du nombre Nc de couches pour formation directe dudit anneau continu sur ledit support, Nc étant inférieur à 15.

On a constaté, de manière inattendue, qu'un tel traitement de surface, sur une profondeur Ep aussi faible, était néanmoins suffisant pour que la couche d'ordre N (N variant de 1 à Nc-1) serve de support suffisamment stable à la couche d'ordre N+1 qui la suit immédiatement, lors de l'enroulement du ruban sur lui-même en Nc couches superposées, empêchant ainsi les fibres de renforcement de migrer d'une couche N vers les couches de rang inférieur (N-1, N-2, etc.).

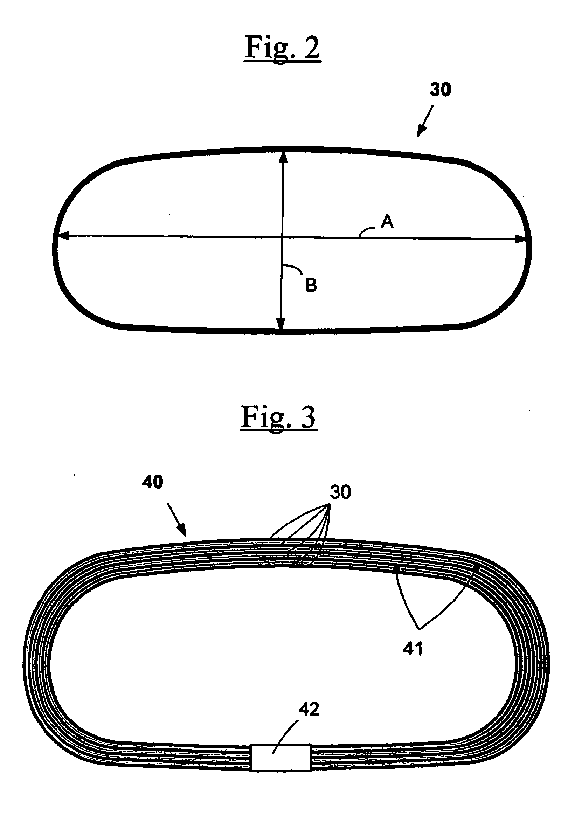

L'invention concerne également un dispositif pour la fabrication d'un bloc composite de géométrie fermée, sous forme d'un anneau continu, à base de fibres de renforcement et d'une résine réticulable, par enroulement en continu et superposition en plusieurs couches d'un ruban desdites fibres de renforcement noyées dans une matrice à base d'une composition comportant ladite résine réticulable, ledit dispositif comportant d'amont en aval (références aux figures 1 et 2):
■ des moyens d'arrangement (10) rectiligne des fibres de renforcement (11) et d'entraînement (23) dudit arrangement (12) dans une direction d'avancement (F) ;
■ une chambre à vide (13, 13a, 13b) ;
■ en sortie de la chambre à vide, une chambre d'imprégnation (14, 15, 16, 17, 18) destinée à imprégner les fibres (11, 12) par la composition de résine à l'état liquide (17) ;
■ des moyens de calibrage (19, 20) comportant au moins une filière de calibrage (20), pour formation d'un ruban (21) comportant les fibres (11) et la résine (17) à l'état liquide ;
■ des moyens de traitement de surface (22) aptes à solidifier la face supérieure dudit ruban (21) ;
■ un support ou mandrin (23) de forme fermée, de préférence convexe, destiné à recevoir ledit ruban (21) pour formation d'un anneau composite (30), par superposition et enroulement unidirectionnel de plusieurs couches dudit ruban.

L'invention ainsi que ses autres avantages seront aisément compris à la lumière de la description détaillée et des exemples de réalisation qui suivent, ainsi que des figures relatives à ces exemples qui schématisent un dispositif utilisable pour la mise en oeuvre du procédé de l'invention (Fig. 1), un bloc composite (anneau élémentaire continu) obtenu selon le procédé de l'invention (Fig. 2), ainsi qu'un exemple d'un assemblage de plusieurs blocs composites (Fig. 3) pouvant constituer une structure de renforcement pour un bandage élastique non pneumatique (Fig. 4).

### DESCRIPTION DETAILLEE DE L'INVENTION

Dans la présente description, sauf indication expresse différente, tous les pourcentages (%) indiqués sont des % en masse.

Les trois premières étapes (arrangement, dégazage puis imprégnation) du procédé de l'invention sont des étapes connues de l'homme du métier, ainsi que les matières (fibres et compositions de résine) utilisées ; elles ont par exemple été décrites dans l'une et/ou l'autre des deux demandes EP-A-1 074 369 et EP-A-1 174 250 précitées.

Tout type de fibre de renforcement est utilisable dès lors que cette dernière est compatible avec sa matrice de résine réticulable. Une telle fibre est par exemple choisie dans le groupe constitué par les fibres polyacrylique, polyacrylonitrile, alcool polyvinylique, polyamide aromatique (ou "aramide"), polyamide-imide, polyimide, les chlorofibres, les fibres polyester, polyester aromatique, polyéthylène, polypropylène, les fibres de cellulose, rayonne, viscose, polyphénylène benzobisoxazole (ou "PBO"), polyéthylène naphténate ("PEN"), les fibres de verre, de carbone, de silice, les fibres céramiques, et les mélanges de telle fibres. On préfère utiliser des fibres à haute ténacité, particulièrement des fibres choisies dans le groupe constitué par les fibres de verre, les fibres de carbone et les mélanges de telles fibres.

Avant toute imprégnation des fibres, doit être conduite une étape de dégazage de l'arrangement de fibres par l'action du vide, afin notamment de renforcer l'efficacité de l'imprégnation et surtout de garantir l'absence de bulles à l'intérieur de l'anneau composite final. Une telle étape de dégazage a été décrite en détail dans la demande EP-A-1 174 250 précitée.

La composition de résine employée est de préférence une composition du type réticulable (ou durcissable) par un rayonnement ionisant, tel que par exemple un rayonnement de type UV ou UV-visible émettant de préférence dans le spectre allant au moins de 300 nm à 450 nm, un faisceau d'électrons accélérés ou de rayons X.

A titre de résine réticulable, on utilise de préférence une résine polyester ou vinylester. Par résine "polyester", on entend de manière connue une résine du type polyester insaturé. Les résines vinylester sont quant à elles bien connues dans le domaine des matériaux composites.

Sans que cette définition soit limitative, la résine vinylester est préférentiellement du type époxyvinylester. On utilise plus préférentiellement une résine vinylester, notamment du type époxyde, qui au moins pour partie est à base (c'est-à-dire greffée sur une structure du type) novolaque (encore appelée phénoplaste) et/ou bisphénolique, soit préférentiellement une résine vinylester à base novolaque, bisphénolique, ou novolaque et bisphénolique.

Une résine époxyvinylester à base novolaque (partie entre crochets dans la formule I ci-dessous) répond par exemple, de manière connue, à la formule (I) qui suit :

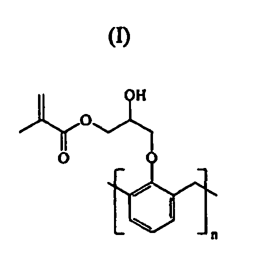

Une résine époxyvinylester à base bisphénolique A (partie entre crochets de la formule II ci-dessous) répond par exemple à la formule (le "A" rappelant que le produit est fabriqué à l'aide d'acétone):

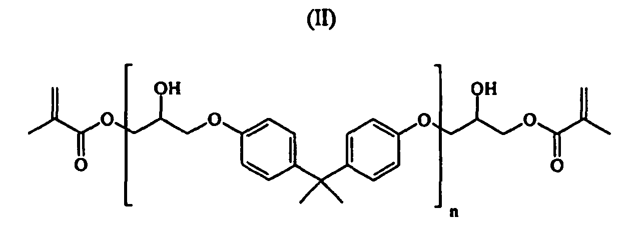

Une résine époxyvinylester de type novolaque et bisphénolique a montré d'excellents résultats. A titre d'exemple d'une telle résine, on peut citer notamment la résine vinylester "ATLAC 590" de la société DSM (diluée avec environ 40% de styrène) décrite dans les demandes EP-A-1 074 369 et EP-A-1 174 250 précitées. De telles résines époxyvinylester sont disponibles chez d'autres fabricants tels que Reichhold, Cray Valley, UCB.

La filière dite "de calibrage" permet, grâce à une section droite de dimensions déterminées, généralement et de préférence rectangulaire, d'ajuster la proportion de résine par rapport aux fibres de renforcement tout en imposant à l'imprégné la forme et l'épaisseur visées pour le ruban.

Le procédé de l'invention a ensuite pour caractéristique essentielle d'intégrer, en sortie de filière de calibrage et avant enroulement unidirectionnel du ruban sur son support final, un traitement de surface spécifique, pouvant être qualifié d'extrême-surface, sur la face supérieure dudit ruban afin de créer une peau solide, une pellicule très fine, dont l'épaisseur Ep représente moins de 10%, préférentiellement moins de 5% de l'épaisseur Er du ruban.

Sans la présence de ce traitement de surface, l'enroulement sur lui-même du composite encore "liquide" (c'est-à-dire que, par définition, les fibres de renforcement sont encore dans une matrice de résine liquide) s'avère très difficile lorsqu'on souhaite augmenter les vitesses de défilement. Il risque de se produire un effet "tranchant" parasite (dit aussi "effet de cabestan") des fibres solides s'enfonçant à travers la résine liquide : les fibres tendent alors à se rapprocher du centre instantané de courbure du mandrin de réception, et la résine à s'en éloigner; il s'ensuit une distribution des fibres et de la résine qui n'est pas totalement homogène dans le volume de la pièce composite, et des hétérogénéités de compactage qui peuvent nuire aux propriétés mécaniques et à l'endurance des composites fabriqués.

L'essentiel est que ladite face supérieure, grâce à la peau solide ainsi formée, serve de base ou support suffisamment stable lors de l'enroulement subséquent du ruban sur lui-même, sans pour autant traiter en profondeur et donc plus intensément ledit ruban. L'intensité du traitement est ajustée de telle manière que la réticulation de la résine soit juste suffisante pour permettre l'enroulement et l'empilage des Nc couches de ruban, sans provoquer l'effet parasite du type "cabestan" décrit ci-dessus. Mais en aucun cas le ruban ainsi traité superficiellement, sur une profondeur Ep aussi faible, ne peut être qualifié de "stabilisé" au sens de la demande de brevet EP-A-1 174 250 précitée ; en d'autres termes, ainsi traité, il n'est pas manipulable sans le détruire.

Pour toutes les raisons exposées ci-dessus, on préfère que l'épaisseur de la peau ou pellicule ainsi formée soit comprise entre 2 et 10 µm, plus préférentiellement entre 3 et 10 µm.

La solidification de la face supérieure du ruban pourra être obtenue par tout moyen de traitement approprié, très localisé, de préférence par une amorce suffisante de réticulation ou polymérisation de la composition d'imprégnation. On citera par exemple un traitement ionisant, notamment du type UV conduit préférentiellement dans ce dernier cas en présence d'un agent photo-initiateur dans la composition d'imprégnation.

Par peau « solide », on entend dans la présente demande, par définition, un peau dont la caractéristique est de ne pas être soluble dans un solvant organique tel que l'acétone, à température ambiante (23°C). Un test simple de solubilité dans l'acétone consistera à prélever un échantillon de ruban ainsi traité, directement en sortie des moyens de traitement 22 décrits ultérieurement, à le laver et rincer abondamment dans l'acétone pendant au moins 2 minutes à la température ambiante (23°C) : on ne doit récupérer alors, hormis les fibres de renforcement solides, qu'une pellicule très fine de résine réticulée, d'épaisseur Ep représentant moins de 10% de l'épaisseur Er du ruban, préférentiellement comprise entre 3 et 10 µm, et correspondant à la partie supérieure du ruban qui a subi le traitement de solidification ou réticulation.

On souhaite que la durée de ce traitement de surface, réalisée en continu sur le ruban en cours de défilement, soit la plus courte possible, préférentiellement inférieure à 10 secondes, typiquement de l'ordre de quelques dixièmes de secondes tout au plus. C'est en cela que l'on peut parler de traitement du type "flash".

Dans le cas d'un flash UV par exemple, on comprend aisément que la durée du traitement va dépendre directement de nombreuses variables parmi lesquelles, notamment, la nature de la résine, la quantité de photo-initiateur, la puissance, la longueur d'onde et l'éloignement de la source d'émission UV. L'homme du métier saura aisément adapter et contrôler ses conditions particulières de traitement pour mettre en oeuvre le procédé de invention, le cas échéant par quelques essais d'ajustement successifs. On préfère que la durée du traitement (durée d'exposition à la source UV notamment) soit inférieure à 5 s, plus préférentiellement encore inférieure à 2 s.

Le ruban de fibres ainsi traité en "extrême-surface" arrive ensuite, en continu, sur un support ou mandrin de forme adaptée sur lequel il est alors enroulé directement, unidirectionnellement, par superposition du nombre Nc prédéterminé de couches. On forme ainsi un anneau continu et fermé dont la section droite est essentiellement rectangulaire.

Selon un mode de réalisation préférentiel, la contrainte de tension subie par les fibres de renforcement, dans le ruban en cours de défilement (c'est-à-dire par les fibres imprégnées), est comprise entre 0,2 et 5 cN/tex (centinewton par tex) ; il s'agit donc de la tension mesurée entre la filière de calibrage et l'entrée du support ou mandrin dictant la forme du bloc composite final. On a constaté qu'en dehors de ce domaine de tension préférentiel, il existait un risque de déformation ou tout au moins de perte de régularité de forme du ruban, pouvant être nuisible à la qualité et endurance du bloc composite final. Pour cette raison, ladite contrainte de tension est plus préférentiellement comprise entre 0,5 et 2,5 cN/tex.

L'opération d'enroulement du ruban sur ledit mandrin se fait de préférence par rotation du mandrin lui-même dans un plan fixe et tangentiel au plan d'arrivée du ruban sur le mandrin tournant. On stoppe l'opération d'enroulement une fois les Nc couches de ruban enroulées sur elles-mêmes.

Un avantage notable du procédé de l'invention et de son traitement de surface est que le ruban garde encore un pouvoir collant suffisant pour permettre l'adhésion, sur la couche d'ordre N, de la couche suivante (N+1) sans qu'il soit nécessaire d'exercer une quelconque action mécanique et/ou thermique supplémentaire.

Toutefois, selon une variante de réalisation possible, chaque couche d'ordre N peut être pressée mécaniquement à l'entrée du support ou mandrin, par exemple par rouletage à l'aide d'une roulette de même largeur que le ruban, de manière à compacter légèrement l'ensemble, garantir une excellente adhésion entre les couches successives, répartir les fibres de manière homogène latéralement.

A ce stade est obtenu un bloc composite se présentant sous la forme d'un anneau plat continu, dont les fibres de renforcement sont sensiblement unidirectionnelles, réparties de manière homogène dans tout le volume de la matrice (composition de résine).

La géométrie particulière de l'anneau ainsi formé, de préférence convexe (par exemple circulaire, ovale, elliptique), est bien sûr dictée par celle du support ou mandrin sur lequel le ruban a été enroulé. Selon une variante de réalisation préférentielle, le support ou mandrin, par exemple en métal, est pourvu d'une gorge de réception épousant la forme du ruban, de profondeur appropriée pour recevoir et stabiliser géométriquement les Nc couches de ruban superposées.

Une fois l'anneau composite ainsi formé, on soumet préférentiellement la résine à une polymérisation suffisante (par exemple à l'aide d'UV) pour stabiliser suffisamment ledit anneau, cette fois sur toute son épaisseur, avant séparation d'avec son support. Pour faciliter cette séparation, ledit support ou mandrin est avantageusement construit en deux parties amovibles, symétriques ou non, qui peuvent être aisément séparées mécaniquement.

Le bloc composite ainsi stabilisé, dans lequel la composition de résine est alors essentiellement en phase solide, peut alors être aisément manipulé sans risque de le détruire, stocké tel quel ou traité immédiatement afin de finir de polymériser la résine le cas échéant (cuisson ou réticulation finale).

L'opération de cuisson finale peut être réalisée par tout moyen connu de l'homme du métier, sous simple pression atmosphérique c'est-à-dire "hors moule" (ou "moule ouvert" selon une terminologie reconnue), par exemple dans une enceinte UV ou un simple four, ou encore sous pression élevée (typiquement plusieurs bars à plusieurs dizaines de bars) à la température appropriée. Une variante de réalisation possible consiste à cuire totalement le bloc composite sur son support ou mandrin de réception, et à n'extraire ce dernier qu'après cuisson complète.

L'épaisseur de l'anneau composite final est de préférence comprise entre 0,5 et 5,0 mm (millimètres), plus préférentiellement comprise dans un domaine de 1 à 2 mm. Sa largeur est de préférence inférieure à 25 mm, plus préférentiellement comprise dans un domaine de 5 à 20 mm.

Quant aux dimensions de l'anneau lui-même (i.e., sensiblement celle du mandrin ou support ayant servi à sa fabrication), sa plus grande dimension (par exemple son diamètre si l'anneau est de géométrie circulaire) est typiquement de l'ordre de quelques cm (centimètres) à quelques dizaines de cm.

Deux autres caractéristiques essentielles du procédé de l'invention sont d'une part l'épaisseur maximale du ruban en sortie de filière de calibrage, qui doit être inférieure à 0,5 mm, d'autre part le nombre maximal de couches qui sont enroulées pour formation de l'anneau composite, qui doit être inférieur à 15. Il s'est avéré que si ces deux caractéristiques ne sont pas vérifiées, la forme et la régularité du ruban comme celles du composite final ne sont plus sous contrôle, ce qui entraîne une dégradation rédhibitoire de l'endurance en flexion-compression de l'anneau composite final. Par ailleurs, une épaisseur inférieure à 0,1 mm (soit 100 µm) n'est pas compatible avec les contraintes de production industrielles.

Pour toutes les raisons indiquées ci-dessus, l'épaisseur du ruban en sortie de filière est choisie préférentiellement comprise entre 0,10 et 0,35 mm, plus préférentiellement comprise entre 0,15 et 0,30 mm ; le nombre de couches Nc est quant à lui préférentiellement inférieur à 10, plus préférentiellement compris entre 5 et 10.

L'homme du métier s'attendait à ce que des bulles d'air se forment inévitablement en surface du ruban, à la sortie de la filière de calibrage, en raison de la surpression imposée (fin de zone sous vide), et que ces bulles soient ensuite aisément emprisonnées entre les couches de ruban en raison de la technique d'enroulement ici adoptée, en l'occurrence un enroulement unidirectionnel par superposition de couches (sans trancannage, fibres non croisées), qui plus est en l'absence de tension notable sur les fibres. Un tel effet parasite aurait naturellement nuit à la qualité, à l'apparence du composite final ainsi qu'à son endurance.

De manière inattendue il n'est en rien, à condition de respecter toutes les caractéristiques techniques combinées du procédé de l'invention, en particulier les deux conditions essentielles énoncées ci-dessus relatives à l'épaisseur du ruban élémentaire et au nombre de couches superposées.

Le procédé de l'invention peut être mis en oeuvre à l'aide d'un dispositif lui-même objet de l'invention.

La figure 1 annexée schématise très simplement un exemple d'un tel dispositif 1, pour une partie (après sortie de la filière 20) représenté en perspective afin d'illustrer la naissance du ruban 21 après passage dans les moyens de calibrage 19, 20.

On y voit une bobine 10 contenant, dans l'exemple illustré, des fibres de verre 11. La bobine est déroulée en continu par entraînement, de manière à réaliser un arrangement rectiligne 12 de ces fibres 11. En général, les fibres de renforcement sont livrées en "rovings", c'est à dire déjà en groupes de fibres enroulées en parallèle sur une bobine (par exemple, on utilise des fibres commercialisées par Owens Corning sous la désignation de fibre "Advantex", de titre égal à 1200 tex (pour rappel, 1 tex = 1 g/1000 m de fibre)). C'est par exemple la traction exercée par la réception tournante 23 qui va permettre l'avancement des fibres en parallèle et du ruban tout le long de l'installation 1.

Cet arrangement 12 traverse ensuite une chambre à vide 13 (reliée à une pompe à vide non représentée), disposée entre une tubulure d'entrée 13a et une tubulure de sortie 13b débouchant sur la chambre d'imprégnation 14, les deux tubulures de préférence à paroi rigide ayant par exemple une section minimale supérieure (typiquement deux fois plus) à la section totale de fibres et une longueur très supérieure (typiquement 50 fois plus) à ladite section minimale.

Comme déjà enseigné par la demande EP-A-1 174 250 précitée, l'utilisation de tubulures à paroi rigide, aussi bien pour l'orifice d'entrée dans la chambre à vide que pour l'orifice de sortie de la chambre à vide et le transfert depuis la chambre à vide jusqu'à la chambre d'imprégnation, s'avère compatible à la fois avec des cadences élevées de passage des fibres au travers des orifices sans rompre les fibres, mais aussi permet d'assurer une étanchéité suffisante. Il suffit, au besoin expérimentalement, de rechercher la plus grande section de passage, compte tenu de la section totale des fibres à traiter, permettant encore d'offrir une étanchéité suffisante, compte tenu de la vitesse d'avancement des fibres et de la longueur des tubulures. Typiquement, le vide à l'intérieur de la chambre 13 est par exemple de l'ordre de 0,1 bar.

En sortie de la chambre à vide 13, l'arrangement 12 de fibres 11 traverse une chambre d'imprégnation 14 comportant un réservoir d'alimentation 15 (relié à une pompe doseuse non représentée) et un réservoir d'imprégnation 16 étanche totalement rempli de composition d'imprégnation 17 à base d'une résine durcissable du type vinylester (e.g., "ATLAC 590" de DSM). A titre d'exemple, la composition comporte en outre (à un taux pondéral de 1 à 2%) un agent photo-initiateur approprié pour le rayonnement UV et/ou UV-visible par lequel la composition sera ultérieurement traitée, par exemple l'oxyde de bis(2,4,6-triméthylbenzoyl)-phénylphosphine ("Irgacure 819" de la société Ciba). Bien entendu, la composition d'imprégnation 17 est à l'état liquide. Il ressort de la chambre d'imprégnation 14, dans une tubulure de sortie 18 étanche (toujours sous vide), un imprégné qui comporte par exemple de 50 à 75% (% en poids) de fibres solides 11, le reste étant constitué par la matrice liquide d'imprégnation 17.

L'imprégné passe ensuite à travers des moyens de calibrage 19 comportant au moins une filière de calibrage 20 dont le canal (non représenté ici), par exemple de forme rectangulaire ou conique, est adapté aux conditions particulières de réalisation. A titre d'exemple, ce canal a une section droite minimale de forme rectangulaire dont l'orifice aval a des dimensions (par exemple 5,3 mm x 0,25 mm ou 10,6 mm x 0,25 mm) légèrement supérieures à celle du ruban visé. Ladite filière a une longueur qui est typiquement supérieure d'au moins 100 fois à la dimension minimale de la section minimale. Elle a pour fonction d'assurer une grande précision dimensionnelle au produit fini, elle peut également jouer un rôle de dosage du taux de fibre par rapport à la résine. Selon une variante de réalisation possible, la filière 20 peut être directement intégrée à la chambre d'imprégnation 14, ce qui évite par exemple l'emploi de la tubulure de sortie 18.

Grâce aux moyens de calibrage (19, 20) est obtenu à ce stade un ruban composite 21 "liquide" (liquide au sens que sa résine d'imprégnation est toujours liquide pour plus de 90% de son épaisseur Er), dont la forme de la section droite est essentiellement rectangulaire (par exemple 5 mm x 0,2 mm ou 10 mm x 0,2 mm, respectivement). Ce ruban 21 d'épaisseur Er est entraîné dans le sens de la flèche F.

Avant enroulement du ruban liquide 21 sur son support de réception final 23, on applique un traitement de surface du type flash (c'est-à-dire très court, par exemple de l'ordre de 1 seconde) à l'aide des moyens de traitement 22 destinés à créer, sur la face supérieure dudit ruban, une peau solide dont l'épaisseur Ep représente moins de 10% de l'épaisseur Er du ruban (soit moins de 20 µm dans le présent exemple) ; les moyens 22 consistent par exemple en une lampe UV (lampe "UVAprint" de la société Dr. Hönle, de longueur d'onde 200 à 600 nm).

Entre les moyens de calibrage (19, 20) et le support de réception finale (23), on préfère maintenir les tensions subies par les fibres à un niveau modéré, compris par exemple entre 0,5 et 2,5 cN/tex ; pour contrôler cela, on pourra par exemple mesurer ces tensions directement en sortie de filière, à l'aide de tensiomètres appropriés bien connus de l'homme du métier.

Le ruban 21 ainsi traité arrive ensuite sur son support de réception finale 23, par exemple un mandrin tournant de forme convexe (ici ovale, à titre d'exemple), à l'entrée duquel il peut être, selon un mode de réalisation avantageux, pressé mécaniquement à l'aide des moyens 24 (par exemple par rouletage mécanique à l'aide d'une roulette) exerçant une légère pression P sur la face supérieure du ruban 21. Le mandrin tournant 23 est de préférence pourvu d'une gorge de réception 25 épousant la forme et largeur du ruban 21 et facilitant ainsi l'enroulement du ruban sur lui-même en ses différentes couches Nc superposées.

Une fois les Nc couches de ruban enroulées sur le support ou mandrin 23, on stoppe l'enroulement, pour l'obtention du bloc composite final visé (référencé 30 à la Fig. 2).

Au regard du mandrin 23 peuvent être éventuellement disposés des moyens de stabilisation (26) aptes par exemple à polymériser la résine dudit anneau composite sur ledit support ou mandrin (23). Le ruban ainsi stabilisé peut être manipulé aisément, il est par exemple traité 5 min dans un four UV avant cuisson finale, par exemple dans un four sous pression et température (par exemple à 230°C pendant 5 à 6 min sous 10 bars). Selon une autre variante de réalisation, toute l'opération de cuisson pourrait être réalisée sous rayonnement UV, entièrement ou non sur le mandrin de réception.

On obtient finalement un bloc composite sous forme d'un anneau continu fermé, dont les fibres de renforcement sont réparties de manière homogène dans tout le volume. Ce bloc composite est doté d'excellentes propriétés mécaniques, avec en particulier une très haute endurance en flexion et en cisaillement.

Un tel exemple de bloc composite 30 a été reproduit schématiquement à la figure 2 annexée, il a été obtenu par enroulement sur un mandrin convexe de forme elliptique. Il consiste en un anneau continu plat 30 fermé dont la section droite rectangulaire a pour dimensions 10 mm x 1,4 mm. Comme on le voit à la figure 2, la forme ou géométrie de l'anneau est essentiellement elliptique avec des dimensions intérieures longitudinale (notée A à la fig. 2) de l'ordre de 15 cm et transversale (notée B à la fig. 2) de l'ordre de 6 cm. Un tel anneau ou bloc composite a été préparé par enroulement de 7 (Nc = 7) couches successives de ruban, conformément au procédé de l'invention précédemment décrit, à l'aide d'un dispositif tel que schématisé à la figure 1.

L'invention offre ainsi la possibilité de fabriquer un bloc composite en très petites sections qui peut avoir de très nombreuses applications industrielles, qu'il soit utilisé individuellement ou associé avec d'autres blocs composites pour formation de structures plus complexes. De telles structures pourront servir notamment d'armature de renforcement à tout système de liaison au sol de véhicules automobiles, tels que bandage non pneumatique, bandage pneumatique, appui interne de sécurité pour pneumatique, roue, autre élément de suspension et anti-vibratoire.

A titre d'exemple, en adaptant le nombre "Na" (Na préférentiellement inférieur à 10, par exemple compris dans un domaine de 3 à 7) et les dimensions de ces anneaux élémentaires, ces derniers peuvent être avantageusement emboîtés les uns dans les autres, puis agrafés mécaniquement ou "chimiquement" grâce par exemple à l'emploi d'un polymère de remplissage destiné à combler tous les interstices présents entre les anneaux élémentaires. Ce polymère de remplissage devra bien entendu être compatible avec la résine de l'anneau composite et capable d'une bonne adhésion avec cette dernière, si besoin aux moyens d'une composition adhésive appropriée telle que décrite par exemple dans la demande WO 2004/058909. Ce polymère est par exemple un élastomère diénique ou un polyuréthane.

On a schématisé à la figure 3 un exemple d'une telle armature de renforcement composite 40 formée de 5 (Na = 5) anneaux élémentaires 30 qui sont solidarisés "chimiquement" grâce à l'emploi d'un polymère de remplissage 41 (par exemple en polyuréthane ou en caoutchouc diénique) comblant les interstices présents entre les 5 anneaux élémentaires 30. L'armature 40 peut comporter des moyens de liaison mécaniques 42 (par exemple une agrafe) destinés à assurer la liaison ultérieure à la partie rigide d'une roue comme expliqué ci-après.

Cette armature de renforcement composite peut former un arceau de renforcement radial d'une carcasse de bandage non pneumatique tel que décrit par exemple dans les demandes de brevet WO-A-00/37269 et EP-A-1 359 028.

La figure 4 annexée montre une perspective partielle d'un tel bandage flexible non pneumatique 50. Un tel bandage, lorsqu'il est associé à tout autre élément mécanique rigide destiné à assurer la liaison entre le bandage flexible et le moyeu, remplace l'ensemble constitué par la pneumatique et la roue tels qu'on les connaît sur la plupart des véhicules routiers actuels.

Le profil du bandage délimite une cavité interne torique de section ovoïdale. Le bandage 50 comporte une zone de fixation 51 (comportant les moyens de liaison 42 illustrés à la figure 3), deux flancs 52 et une bande de roulement 53. La zone de fixation est destinée à être rigidement liée à un moyeu de roue par l'intermédiaire d'un élément mécanique comme un disque ou voile de roue (non représenté ici). Sur cette figure 4, la bande de roulement 53 comporte plusieurs nervures circonférentielles, mais cet aspect n'a bien entendu aucun caractère limitatif. Les flancs 52 sont arrondis et occupent la majeure partie de la hauteur radiale du bandage 50. La structure portante comporte une pluralité d'éléments de support constitués par les armatures de renforcement composites 40 illustrés à la figure 3 précédente.

Les éléments de support 40 sont adjacents circonférentiellement et s'étendent chacun sensiblement radialement vers l'extérieur à partir de la zone de fixation 51. La figure 4 montre également un principe de ce type de bandage non pneumatique selon lequel c'est la flexion des éléments de support qui permet de porter la charge. Sur cet exemple particulier, le bandage comporte une centaine d'éléments de support 40. Ce nombre peut bien sûr être très différent en fonction par exemple du type de véhicule et du type d'usage auxquels il est destiné et des caractéristiques des éléments de support. Le nombre d'éléments peut ainsi varier par exemple de 30 à 300. De préférence, une structure d'interconnexion disposée radialement sous la bande de roulement 53, relativement rigide en traction-compression longitudinale, relie circonférentiellement l'ensemble des éléments de support 40.

Pour d'autres détails sur la constitution de ces éléments de support et de la structure d'interconnexion, le lecteur pourra se reporter utilement aux demandes de brevet WO-A-00/37269 et EP-A-1 359 028 précitées.

Un tel bandage non pneumatique est susceptible d'équiper tout type de véhicule à moteur, par exemple de type tourisme, deux roues (notamment motos, scooters), avions, comme des véhicules industriels choisis parmi camionnettes, "Poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

En conclusion, grâce au procédé de l'invention, il est désormais possible d'obtenir un anneau composite de très haute qualité par simple enroulement unidirectionnel de couches de résine à l'état essentiellement liquide, ceci au moindre coût, en évitant notamment l'emploi de longues chambres de stabilisation et leurs série de tubes d'irradiation.

## Revendications

1. Procédé de fabrication d'un bloc composite de géométrie fermée, sous forme d'un anneau continu, à base de fibres de renforcement et d'une résine réticulable, par enroulement en continu et superposition en un nombre de couches prédéterminé Nc d'un ruban desdites fibres de renforcement noyées dans une matrice à base d'une composition comportant ladite résine réticulable, ledit procédé comportant, d'amont en aval, les étapes suivantes :
■ réaliser un arrangement rectiligne de fibres de renforcement, et entraîner cet arrangement dans une direction d'avancement ;
■ dégazer l'arrangement de fibres par l'action du vide ;
■ après dégazage, imprégner ledit arrangement de fibres par ladite composition de résine à l'état liquide ;
■ faire passer l'imprégné ainsi obtenu au travers d'une filière pour imposer audit imprégné une forme de ruban constitué des fibres de renforcement dans leur matrice de résine liquide, l'épaisseur dudit ruban étant comprise entre 0,1 mm et 0,5 mm ;
■ en sortie de filière, appliquer un traitement de surface sur la face supérieure dudit ruban pour créer une peau solide dont l'épaisseur représente moins de 10% de l'épaisseur Er du ruban, de telle manière que ladite peau serve de base lors de l'enroulement subséquent du ruban sur lui-même ;
■ déposer le ruban ainsi traité superficiellement sur un support dictant la forme finale du bloc composite, et enrouler ledit ruban sur ledit support, unidirectionnellement, par superposition du nombre Nc de couches pour formation directe dudit anneau continu sur ledit support, Nc étant inférieur à 15.

2. Procédé selon la revendication 1, dans lequel les fibres de renforcement sont choisies dans le groupe constitué par les fibres de verre, les fibres de carbone, et les mélanges de telles fibres.

3. Procédé selon les revendications 1 ou 2, dans lequel la résine de la composition est une résine réticulable par un rayonnement ionisant.

4. Procédé selon l'une quelconque des revendications 1 à 3, la résine étant une résine vinylester.

5. Procédé selon l'une quelconque des revendications 1 à 4, l'épaisseur de peau Ep représentant moins de 5% de l'épaisseur Er du ruban.

6. Procédé selon l'une quelconque des revendications 1 à 5, l'épaisseur Er du ruban étant comprise entre 0,10 et 0,35 mm.

7. Procédé selon l'une quelconque des revendications 1 à 6, l'épaisseur Ep de la peau étant comprise entre 2 et 10 µm.

8. Procédé selon l'une quelconque des revendications 1 à 7, le traitement de surface consistant en un traitement de réticulation de la résine.

9. Procédé selon la revendication 8, le traitement de réticulation consistant en un traitement ionisant.

10. Procédé selon l'une quelconque des revendications 1 à 9, Nc étant inférieur à 10.

11. Procédé selon l'une quelconque des revendications 1 à 10, l'épaisseur dudit anneau étant comprise entre 0,5 et 5,0 mm.

12. Procédé selon l'une quelconque des revendications 1 à 11, la largeur dudit anneau étant comprise dans un domaine de 5 à 20 mm.

13. Dispositif pour la fabrication d'un bloc composite de géométrie fermée, sous forme d'un anneau continu, à base de fibres de renforcement et d'une résine réticulable, par enroulement en continu et superposition en plusieurs couches d'un ruban desdites fibres de renforcement noyées dans une matrice à base d'une composition comportant ladite résine réticulable, ledit dispositif comportant d'amont en aval :
■ des moyens d'arrangement rectiligne (10) des fibres de renforcement (11) et d'entraînement (23) dudit arrangement (12) dans une direction d'avancement (F) ;
■ une chambre à vide (13, 13a, 13b) ;
■ en sortie de la chambre à vide, une chambre d'imprégnation (14, 15, 16, 17, 18) destinée à imprégner les fibres (11, 12) par la composition de résine à l'état liquide (17) ;
■ des moyens de calibrage (19, 20) comportant au moins une filière de calibrage (20), pour formation d'un ruban (21) comportant les fibres (11) et la résine (17) à l'état liquide ;
■ des moyens de traitement de surface (22) aptes à solidifier la face supérieure dudit ruban (21) ;
■ un support ou mandrin (23) de forme fermée, de préférence convexe, destiné à recevoir ledit ruban (21) pour formation d'un anneau composite (30), par superposition et enroulement unidirectionnel de plusieurs couches dudit ruban.

14. Dispositif selon la revendication 13, les moyens de traitement de surface (22) consistant en des moyens de réticulation de la résine.

15. Dispositif selon la revendication 14, les moyens de réticulation consistant en un rayonnement ionisant.

## Claims

1. Process for manufacturing a composite block of closed geometry, in the form of a continuous ring, based on reinforcing fibres and as a cross-linkable resin, by continuously winding in superposition a predetermined number Nc of layers of a tape of the said reinforcing fibres embedded in a matrix based on a composition comprising the said cross-linkable resin, said process comprising, from the upstream end downstream, the following steps:
■ producing a rectilinear arrangement of reinforcing fibres, and conveying this arrangement in a feed direction;
■ degassing the arrangement of fibres under the action of a vacuum;
■ after degassing, impregnating the said arrangement of fibres with the said resin composition in the liquid state;
■ passing the pre-preg thus obtained through a die to impose on the said pre-preg the shape of a tape consisting of the reinforcing fibres in their liquid resin matrix, the thickness of the said tape being between 0.1 mm and 0.5 mm;
■ on leaving the die, applying a surface treatment to the upper face of the said tape in order to create a solid skin the thickness of which represents less than 10% of the thickness Er of the tape, so that the said skin acts as a base for the subsequent winding of the tape on itself;
■ depositing the thus superficially treated tape on a support that dictates the final shape of the composite block, and winding the said tape onto the said support, in a single direction, by superposing the number Nc of layers in order directly to form the said continuous ring on the said support, Nc being less than 15.

2. Process according to Claim 1, in which the reinforcing fibres are chosen from the group consisting of glass fibre, carbon fibre, and mixtures of such fibres.

3. Process according to Claim 1 or 2, in which the resin of the composition is a resin that can be cross-linked by ionizing radiation.

4. Process according to any one of Claims 1 to 3, the resin being a vinyl ester resin.

5. Process according to any one of Claims 1 to 4, the skin thickness Ep representing less than 5% of the thickness Er of the tape.

6. Process according to any one of Claims 1 to 5, the thickness Er of the tape being between 0.10 and 0.35 mm.

7. Process according to any one of Claims 1 to 6, the thickness Ep of the skin being between 2 and 10 µm.

8. Process according to any one of Claims 1 to 7, the surface treatment consisting in a treatment to cross-link the resin.

9. Process according to Claim 8, the cross-linking treatment consisting of an ionizing treatment.

10. Process according to any one of Claims 1 to 9, Nc being less than 10.

11. Process according to any one of Claims 1 to 10, the thickness of the said ring being between 0.5 and 5.0 mm.

12. Process according to any one of Claims 1 to 11, the width of the said ring being in a range from 5 to 20 mm.

13. Device for manufacturing a composite block of closed geometry, in the form of a continuous ring, based on reinforcing fibres and on a cross-linkable resin, by continuously winding in superposition in several layers a tape of the said reinforcing fibres embedded in a matrix based on a composition comprising the said cross-linkable resin, the said device comprising, from the upstream end downstream:
■ means for producing a rectilinear arrangement (10) of reinforcing fibres (11) and conveying (23) the said arrangement (12) in a feed direction (F);
■ a vacuum chamber (13, 13a, 13b);
■ at the exit from the vacuum chamber, an impregnation chamber (14, 15, 16, 17, 18) intended to impregnate the fibres (11, 12) with the resin composition in the liquid state (17);
■ sizing means (19, 20) comprising at least one sizing die (20) to form a tape (21) comprising the fibres (11) and the resin (17) in the liquid state;
■ surface treatment means (22) capable of solidifying the upper face of the said tape (21);
■ a support or mandrel (23) of closed shape, preferably convex, intended to receive the said tape (21) to form a composite ring (30) by a one-way superposed winding of several layers of the said tape.

14. Device according to Claim 13, the surface treatment means (22) consisting of means of cross-linking the resin.

15. Device according to Claim 14, the cross-linking means consisting of an ionizing radiation.

## Patentansprüche

1. Verfahren zur Herstellung eines Verbundblocks mit geschlossener Geometrie in Form eines durchgehenden Rings, auf der Basis von Verstärkungsfasern und von einem vernetzbaren Harz, durch fortlaufendes Aufwickeln und Schichten in einer vorbestimmten Anzahl Nc von Schichten eines Bands der Verstärkungsfasern, die in eine Matrix auf der Basis einer Zusammensetzung eingebettet sind, die das vernetzbare Harz enthält, wobei das Verfahren von vorne nach hinten die folgenden Schritte aufweist:
• Herstellen einer geradlinigen Anordnung von Verstärkungsfasern und Antrieb dieser Anordnung in einer Vorschubrichtung;
• Entgasen der Faseranordnung durch Vakuumwirkung;
• nach dem Entgasen, Imprägnieren der Faseranordnung mit der Harzzusammensetzung im flüssigen Zustand;
• Führen des so erhaltenen Imprägnats durch eine Düse, um dem Imprägnat die Form eines Bands aufzuzwingen, das aus den Verstärkungsfasern in ihrer Matrix aus Flüssigharz besteht, wobei die Dicke des Bands zwischen 0,1 mm und 0,5 mm liegt;
• am Düsenausgang, Anwenden einer Oberflächenbehandlung auf die Oberseite des Bands, um eine feste Haut zu erzeugen, deren Dicke weniger als 10 % der Dicke Er des Bands darstellt, derart, dass die Haut beim nachfolgenden Aufwickeln des Bands auf sich selbst als Basis dient;
• Aufbringen des so oberflächenbehandelten Bands auf einen Träger, der die Endform des Verbundblocks vorgibt, und unidirektionales Aufwickeln des Bands auf den Träger durch Schichten der Anzahl Nc von Schichten zur direkten Formung des durchgehenden Rings auf dem Träger, wobei Nc geringer ist als 15.

2. Verfahren nach Anspruch 1, bei dem die Verstärkungsfasern aus der Gruppe ausgewählt werden, die aus den Glasfasern, den Kohlenstofffasern und den Mischungen solcher Fasern besteht.

3. Verfahren nach den Ansprüchen 1 oder 2, bei dem das Harz der Zusammensetzung ein durch eine ionisierende Strahlung vernetzbares Harz ist.

4. Verfahren nach einem der Ansprüche 1 bis 3, wobei das Harz ein Vinylesterharz ist.

5. Verfahren nach einem der Ansprüche 1 bis 4, wobei die Hautdicke Ep weniger als 5 % der Dicke Er des Bands darstellt.

6. Verfahren nach einem der Ansprüche 1 bis 5, wobei die Dicke Er des Bands zwischen 0,10 und 0,35 mm liegt.

7. Verfahren nach einem der Ansprüche 1 bis 6, wobei die Dicke Ep der Haut zwischen 2 und 10 µm liegt.

8. Verfahren nach einem der Ansprüche 1 bis 7, wobei die Oberflächenbehandlung aus einer Vernetzungsbehandlung des Harzes besteht.

9. Verfahren nach Anspruch 8, wobei die Vernetzungsbehandlung aus einer ionisierenden Behandlung besteht.

10. Verfahren nach einem der Ansprüche 1 bis 9, wobei Nc geringer als 10 ist.

11. Verfahren nach einem der Ansprüche 1 bis 10, wobei die Dicke des Rings zwischen 0,5 und 5,0 mm liegt.

12. Verfahren nach einem der Ansprüche 1 bis 11, wobei die Breite des Rings in einem Bereich von 5 bis 20 mm liegt.

13. Vorrichtung zur Herstellung eines Verbundblocks mit geschlossener Geometrie in Form eines durchgehenden Rings, auf der Basis von Verstärkungsfasern und von einem vernetzbaren Harz, durch fortlaufendes Aufwickeln und Schichten in mehreren Schichten eines Bands der Verstärkungsfasern, die in eine Matrix auf der Basis einer Zusammensetzung eingebettet sind, die das vernetzbare Harz enthält, wobei die Vorrichtung von vorne nach hinten aufweist:
• Einrichtungen zur geradlinigen Anordnung (10) der Verstärkungsfasern (11) und zum Antrieb (23) der Anordnung (12) in eine Vorschubrichtung (F);
• eine Vakuumkammer (13, 13a, 13b);
• am Ausgang der Vakuumkammer, eine Imprägnierkammer (14, 15, 16, 17, 18), die dazu bestimmt ist, die Fasern (11, 12) mit der Harzzusammensetzung im flüssigen Zustand (17) zu imprägnieren;
• Kalibriereinrichtungen (19, 20), die mindestens eine Kalibrierdüse (20) aufweisen, zum Formen eines Bands (21), das die Fasern (11) und das Harz (17) im flüssigen Zustand enthält;
• Einrichtungen zur Oberflächenbehandlung (22), die die Oberseite des Bands (21) verfestigen können;
• ein Träger oder Dorn (23) von geschlossener, vorzugsweise konvexer Form, der dazu bestimmt ist, das Band (21) zum Formen eines Verbundrings (30) durch Schichten und undirektionales Aufwickeln von mehreren Schichten des Bands aufzunehmen.

14. Vorrichtung nach Anspruch 13, wobei die Einrichtungen zur Oberflächenbehandlung (22) aus Einrichtungen zum Vernetzen des Harzes bestehen.

15. Vorrichtung nach Anspruch 14, wobei die Vernetzungseinrichtungen aus einer ionisierenden Strahlung bestehen.
